# DEMANDE DE BREVET EUROPEEN

(11) **EP 4 321 127 A1**
(43) Date de publication de la demande: **14.02.2024**
(21) Numéro de dépôt: 23220678.9
(22) Date de dépôt: 15.03.2018
(51) Int. Cl.: A61C 8/00, A61C 9/00

(54) **ÉLÉMENT DE CICATRISATION, PROCÉDÉ DE RESTAURATION DENTAIRE ET PROCÉDÉ DE FABRICATION D'UN PILLIER DE RESTAURATION DENTAIRE**

(30) Priorité: 20.03.2017 FR 1752258
(62) Demande divisionnaire de: 18709643.3
(71) Demandeur: Euroteknika, 74700 Sallanches (FR)
(72) Inventeur: CALVAT, Benjamin, 73400 Ugine (FR); LANCIEUX, Cédric, 74120 Megève (FR)
(74) Mandataire: Novaimo

(57) **Abrégé**

Procédé de restauration dentaire comprenant une étape de détermination d'un positionnement d'un implant (60) dentaire, intégré à une structure osseuse (62) d'un individu, à partir de l'identification et du positionnement d'un élément de cicatrisation (10) monobloc, fixé au niveau d'une de ses extrémités dans l'implant (60), l'élément de cicatrisation (10) comprenant une surface latérale (13) destinée à une intégration au sein d'une gencive pour mettre en forme la gencive lors de sa cicatrisation, et une surface terminale (14), une partie de la surface latérale (13) et de la surface terminale (14) formant une surface émergente, destinée à rester hors de la gencive, qui est asymétrique par rapport à au moins un plan médian perpendiculaire.

## Description

La présente invention se rapporte à un procédé de restauration dentaire. L'invention se rapporte également à un procédé de fabrication d'un pilier de restauration dentaire et/ou d'une prothèse dentaire comprenant la mise en oeuvre d'un tel procédé de restauration dentaire. L'invention porte aussi sur un élément de cicatrisation adapté pour un tel procédé de restauration dentaire et un tel procédé de fabrication d'un pilier de restauration dentaire et/ou d'une prothèse dentaire.

La restauration dentaire permet de réaliser une dentition artificielle à un patient partiellement ou totalement édenté. Elle repose sur l'intégration d'un ou plusieurs implants dans la structure osseuse, pratiquée par une incision de la gencive afin d'atteindre la structure osseuse et de la percer. Ensuite, un élément de cicatrisation est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'un pilier de restauration sur l'implant, sur lequel est fixée la prothèse dentaire. Le pilier et la prothèse dentaire sont personnalisés, adaptés à l'anatomie du patient et à la dent à remplacer, pour atteindre un résultat aussi proche que possible de la dentition naturelle idéale. Pour cela, le volume précis de l'espace à restaurer est en général pris en compte, par une prise d'empreinte, qui permet la fabrication personnalisée de la prothèse dentaire.

Dans l'état de la technique, les méthodes existantes de restauration dentaire se heurtent à tout ou partie des problèmes techniques suivants :
- dans de nombreux procédés existants, une nouvelle intervention sur la gencive est réalisée après sa cicatrisation suite à la pause d'implant, pour réaliser l'empreinte, matérielle ou numérique, de l'espace à restaurer, tout en ayant une vue de l'implant et de la gencive pour prendre en compte précisément l'ensemble de cette géométrie, dans le but de fabriquer un pilier et une prothèse de formes précises : cette approche est naturellement traumatisante ;
- d'autres procédés existants limitent ce traumatisme en utilisant des composants de cicatrisation qui ne sont pas retirés lors d'une prise d'empreinte, pour ne pas heurter la gencive : en contrepartie, ces procédés utilisent des éléments cicatrisants particuliers, en général de forme sensiblement cylindrique et standard et intégrant parfois des indicateurs et/ou plusieurs composants complémentaires pour permettre la prise en compte de tout ou partie de la géométrie au-dessus de l'implant sans y avoir totalement accès par une prise d'empreinte. Ces méthodes moins traumatisantes présentent alors d'autres inconvénients, de complexité et/ou de moins bonne optimisation de la phase de cicatrisation.

Ainsi, un objet général de l'invention consiste en une solution de restauration dentaire qui ne comprend pas tout ou partie des inconvénients de l'état de la technique.

Plus précisément, un premier objet de l'invention est une solution de restauration dentaire qui minimise le traumatisme du patient lors du procédé de restauration.

Un second objet de l'invention est une solution de restauration dentaire qui permet une restauration la plus adaptée possible à l'anatomie du patient.

Un troisième objet de l'invention est une solution de restauration dentaire la plus simple possible.

A cet effet, l'invention se rapporte à un procédé de restauration dentaire ou à un procédé de fabrication d'un pilier de restauration dentaire comprenant une étape de détermination d'un positionnement d'un implant dentaire, intégré à une structure osseuse d'un individu, à partir de l'identification et du positionnement d'un élément de cicatrisation monobloc, fixé au niveau d'une de ses extrémités dans l'implant, l'élément de cicatrisation comprenant une surface latérale destinée à une intégration au sein d'une gencive pour mettre en forme la gencive lors de sa cicatrisation, et une surface terminale, une partie de la surface latérale et de la surface terminale formant une surface émergente, destinée à rester hors de la gencive, qui est asymétrique par rapport à au moins un plan médian perpendiculaire.

La surface émergente peut être asymétrique dans un plan horizontal et/ou vertical, notamment la hauteur de l'élément de cicatrisation étant supérieure du côté lingual à sa hauteur du côté opposé.

Le procédé de restauration dentaire ou le procédé de fabrication d'un pilier de restauration dentaire peut comprendre une étape de fixation de l'élément de cicatrisation sur l'implant, notamment une étape de fixation par l'intermédiaire d'une vis coopérant avec une ouverture traversante de l'élément de cicatrisation et une ouverture filetée de l'implant.

L'élément de cicatrisation peut comprendre une portée conique coopérant avec une portion conique d'une tête de vis pour rendre étanche une interface entre la vis et l'élément de cicatrisation.

L'élément de cicatrisation peut comprendre, au niveau de l'ouverture, au moins un filet coopérant avec une partie filetée de la vis pour empêcher une dissociation entre la vis et l'élément de cicatrisation par un seul mouvement de translation.

L'élément de cicatrisation peut comprendre une portion tronconique coopérant avec une portée conique de l'implant pour rendre étanche une interface entre l'implant et l'élément de cicatrisation et pour réduire à zéro tout jeu en translation entre l'élément de cicatrisation et l'implant.

L'élément de cicatrisation peut être fabriqué à partir d'un matériau polymère, notamment à partir d'un matériau « PEEK » ou en métal, en zircone ou en titane.

L'élément de cicatrisation peut être fabriqué par usinage et/ou par moulage et/ou par addition de matière.

L'étape de détermination du positionnement de l'implant peut comprendre les sous étapes suivantes :
- prise d'une empreinte manuelle ou numérique d'un espace buccal comprenant l'élément de cicatrisation fixé sur l'implant ;
- détection automatique du positionnement de l'implant par l'identification de :
- l'axe de l'implant correspondant à un axe de l'élément de cicatrisation identifié par la géométrie de sa surface émergente hors de la gencive ou à partir d'une association à un élément de cicatrisation mémorisé stocké dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine ;
- l'orientation de l'implant à partir de l'orientation de la surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine ;
- la hauteur de l'implant par détermination de la hauteur de l'élément de cicatrisation, à partir d'une couleur ou d'un indicateur de sa surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine.

La surface émergente de l'élément de cicatrisation peut être asymétrique par rapport à au moins un plan médian perpendiculaire à la surface émergente et passant par le centre de la surface émergente ou comprenant un axe central de l'élément de cicatrisation.

L'élément de cicatrisation peut comprendre un élément anti-rotationnel, notamment une portion de section hexagonale, pour coopérer avec un élément anti-rotationnel de l'implant, notamment une ouverture de section hexagonale, et garantir une fixation de l'élément de cicatrisation à orientation unique, sans rotation autour de l'implant.

Les parties de la surface émergente de l'élément de cicatrisation destinées respectivement à un positionnement orienté vers l'intérieur et vers l'extérieur de la bouche peuvent présenter une forme différente.

Une section transverse à la surface latérale de l'élément de cicatrisation ou une projection sur un plan parallèle de la surface émergente de l'élément de cicatrisation peut présenter :
- une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
- une partie destinée à un positionnement orienté vers l'extérieur de la bouche de plus grande dimension qu'une partie destinée à un positionnement orienté vers l'intérieur.

La surface terminale ou la surface émergente de l'élément de cicatrisation ou la vis peut comprendre un indicateur pour indiquer sa hauteur ou l'élément de cicatrisation ou la vis peut comprendre une couleur pour indiquer sa hauteur ou un marquage laser et/ou un ou plusieurs codes-barres et/ou des codes datamatrix pour indiquer sa hauteur.

Le procédé de restauration dentaire ou le procédé de fabrication d'un pilier de restauration dentaire peut comprendre une étape de sélection d'un élément de cicatrisation parmi une série d'au moins deux éléments de cicatrisation monoblocs de formes différentes, aptes à la fixation sur le même implant dentaire.

L'invention se rapporte également à un procédé de fabrication d'un pilier de restauration dentaire, destiné à être fixé sur un implant dentaire sur une première extrémité et à recevoir une prothèse sur sa seconde extrémité, comprenant la mise en oeuvre d'un procédé de restauration dentaire tel que défini précédemment et une étape de fabrication d'un pilier de restauration et/ou d'une prothèse.

L'invention porte aussi sur un élément de cicatrisation. Notamment, elle porte sur un élément de cicatrisation permettant la mise en oeuvre du procédé de restauration dentaire et/ou de fabrication d'un pilier tel que décrit ci-dessus.

L'élément de cicatrisation peut être monobloc, et comprendre un dispositif de fixation au niveau d'une de ses extrémités pour un implant, l'élément de cicatrisation comprenant une surface latérale destinée à une intégration au sein d'une gencive pour mettre en forme la gencive lors de sa cicatrisation, et une surface terminale, une partie de la surface latérale et de la surface terminale formant une surface émergente, destinée à rester hors de la gencive, qui est asymétrique par rapport à au moins un plan médian perpendiculaire.

La surface émergente peut être asymétrique dans un plan horizontal et/ou vertical, notamment la hauteur de l'élément de cicatrisation étant supérieure du côté lingual à sa hauteur du côté opposé.

Il peut comprendre une ouverture traversante pour le passage d'une vis, et peut comprendre, au niveau de l'ouverture, au moins un filet apte à coopérer avec une partie filetée d'une vis pour empêcher une dissociation entre la vis et l'élément de cicatrisation par un seul mouvement de translation.

Il peut être en matériau polymère, notamment en matériau « PEEK » ou en métal, en zircone ou en titane.

La surface émergente de l'élément de cicatrisation peut être asymétrique dans un plan horizontal et/ou vertical par rapport à au moins un plan médian perpendiculaire à la surface émergente et passant par le centre de la surface émergente ou comprenant un axe central de l'élément de cicatrisation.

L'élément de cicatrisation peut comprendre un élément anti-rotationnel, notamment une portion de section hexagonale, pour coopérer avec un élément anti-rotationnel d'un implant, notamment une ouverture de section hexagonale, et garantir une fixation de l'élément de cicatrisation à orientation unique, sans rotation autour d'un implant (60).

Les parties de la surface émergente de l'élément de cicatrisation destinées respectivement à un positionnement orienté vers l'intérieur et vers l'extérieur de la bouche peuvent présenter une forme différente et notamment une hauteur différente.

Une section transverse à la surface latérale de l'élément de cicatrisation ou une projection sur un plan parallèle de la surface émergente de l'élément de cicatrisation peut présenter :
- une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
- une partie destinée à un positionnement orienté vers l'extérieur de la bouche de plus grande dimension qu'une partie destinée à un positionnement orienté vers l'intérieur.

La surface terminale ou la surface émergente de l'élément de cicatrisation ou d'une vis positionné dans l'élément de cicatrisation peut comprendre un indicateur pour indiquer sa hauteur ou l'élément de cicatrisation ou une vis peut comprendre une couleur pour indiquer sa hauteur ou un marquage laser et/ou un ou plusieurs codes-barres et/ou des codes datamatrix pour indiquer sa hauteur.

L'invention est plus précisément définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :

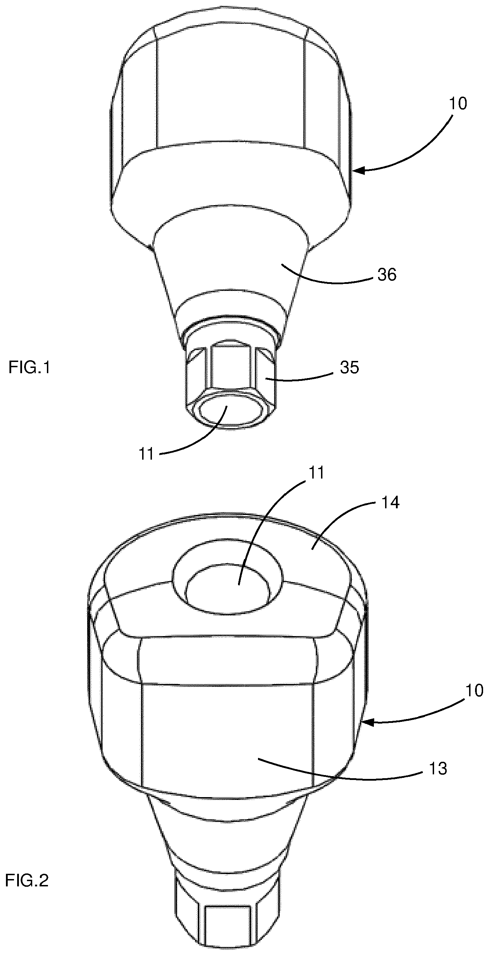

Les figures 1 et 2 représentent respectivement des vues en perspective de dessous et de dessus d'un élément de cicatrisation utilisé dans un procédé de restauration selon un mode de réalisation de l'invention.
Les figures 3a à 3c et 4a à 4c représentent respectivement des vues en perspective de dessus et de dessous d'une série d'éléments de cicatrisation utilisée dans un procédé de restauration selon un mode de réalisation de l'invention.
Les figures 5a à 5c, 6a à 6c et 7a à 7c représentent respectivement des vues de côté, de dessus et de dessous d'une série d'éléments de cicatrisation.
La figure 8 illustre une vue en coupe d'un élément de cicatrisation disposé dans un implant.
La figure 9 illustre une vue de côté d'un élément de cicatrisation disposé dans un implant.
La figure 10 représente une vue en coupe d'un implant
La figure 11 illustre une vue en coupe d'un élément de cicatrisation fixé sur un implant par une vis.
Les figures 12 et 13 représentent respectivement une vue de côté et une vue en coupe d'une phase intermédiaire d'association d'un implant avec un élément de cicatrisation et avec une vis dans un procédé de restauration selon le mode de réalisation de l'invention.
La figure 14 illustre une vue en coupe d'un ensemble de cicatrisation comprenant un élément de cicatrisation entouré de la gencive et fixé dans un implant.
Les figures 15, 16 et 17 représentent deux vues schématiques d'une gencive en coupe au sein de laquelle est fixé un élément de cicatrisation.
La figure 18 représente les dents inférieures et supérieures en vue de dessus.
La figure 19 représente une vue des dents selon une section justa-gingivale.
La figure 20 représente une section horizontale de la dentition au niveau justa-gingival ainsi que les éléments de cicatrisation correspondants retenus selon le mode de réalisation de l'invention.
Les figures 21 à 23 représentent des vues en coupe par un plan médian vertical illustrant des étapes du procédé de restauration selon un mode de réalisation de l'invention.

Pour simplifier la description, nous définissons comme direction horizontale toute direction dans un plan horizontal défini comme un plan parallèle au plan justogingival. Le plan horizontal d'un composant hors de la bouche d'un utilisateur sera défini comme un plan destiné à être positionné de manière parallèle au plan justogingival après son positionnement en bouche. En complément, la direction verticale est définie comme la direction perpendiculaire à un plan horizontal, selon laquelle on mesurera la hauteur d'un composant. Cette direction perpendiculaire correspond généralement à l'axe d'un implant.

Le procédé de restauration selon le mode de réalisation de l'invention comprend donc deux phases, comme explicité précédemment : une première phase dite de cicatrisation durant laquelle un ou plusieurs implant(s) 60 sont intégrés dans une structure osseuse 62 du patient par ostéointégration, et durant laquelle un élément de cicatrisation 10 monobloc est utilisé, comme cela va être détaillé par la suite, puis une seconde phase de restauration en tant que telle, durant laquelle une prothèse définitive est mise en place sur le ou les implants 60 par l'intermédiaire d'un pilier de restauration.

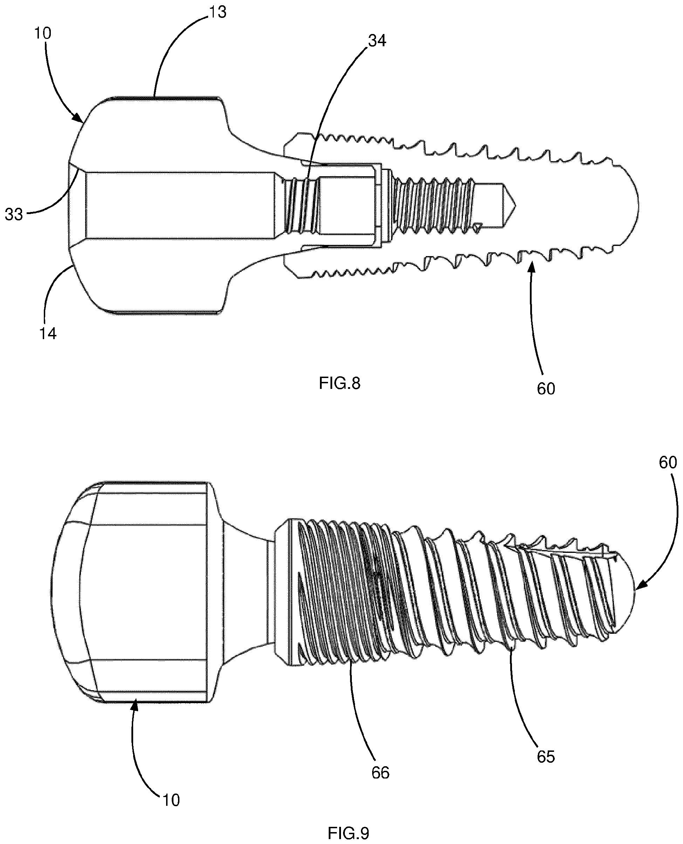

Comme illustré sur les figures 8 à 14, l'implant 60 comprend une enveloppe globale de forme cylindrique ou tronconique et un axe longitudinal L formant un axe de révolution de cette enveloppe globale. L'implant 60 comprend un moyen d'encrage dans la structure osseuse du patient. Ce moyen d'encrage peut être un ensemble de filets disposés sur un pourtour extérieur de l'implant et comprenant un pas de filetage variable. Une partie inférieure de l'implant 65, c'est-à-dire une partie de l'implant au fond de la structure osseuse 62, peut comprendre des filets plus larges tandis qu'une partie supérieure 66 de l'implant, c'est-à-dire une partie de l'implant du coté de la surface de la structure osseuse, peut comprendre des filets plus fins. L'implant comprend une ouverture du côté de son extrémité supérieure et suivant l'axe longitudinal L à l'intérieur de laquelle se trouve un dispositif de connexion 3 avec l'élément de cicatrisation 10. Le dispositif de connexion 3 comprend une ouverture filetée 21, une ouverture de section hexagonale 22 dans le prolongement de l'ouverture filetée et une portée conique 23 débouchant sur une face supérieure de l'implant. L'ouverture filetée 21, l'ouverture de section hexagonale 22 et la portée conique 23 sont adjacentes, coaxiales à l'axe longitudinal L et agencées de sorte que l'ouverture filetée 21 est du coté inférieur de l'implant 10, la portée conique 23 est du coté supérieur de l'implant 10 et l'ouverture de section hexagonale 22 est entre l'ouverture filetée 21 et la portée conique 23.

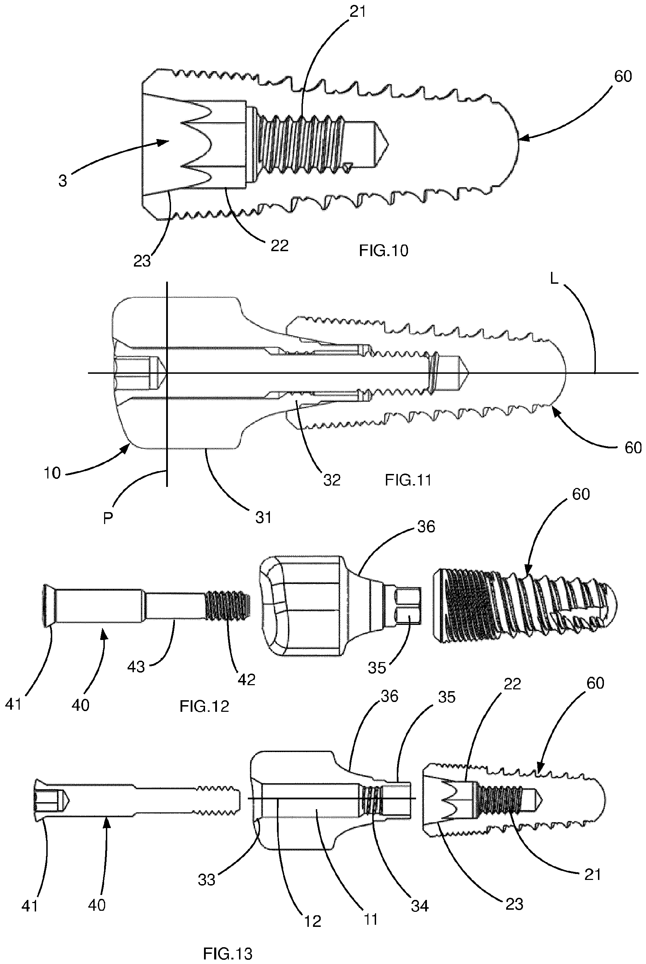

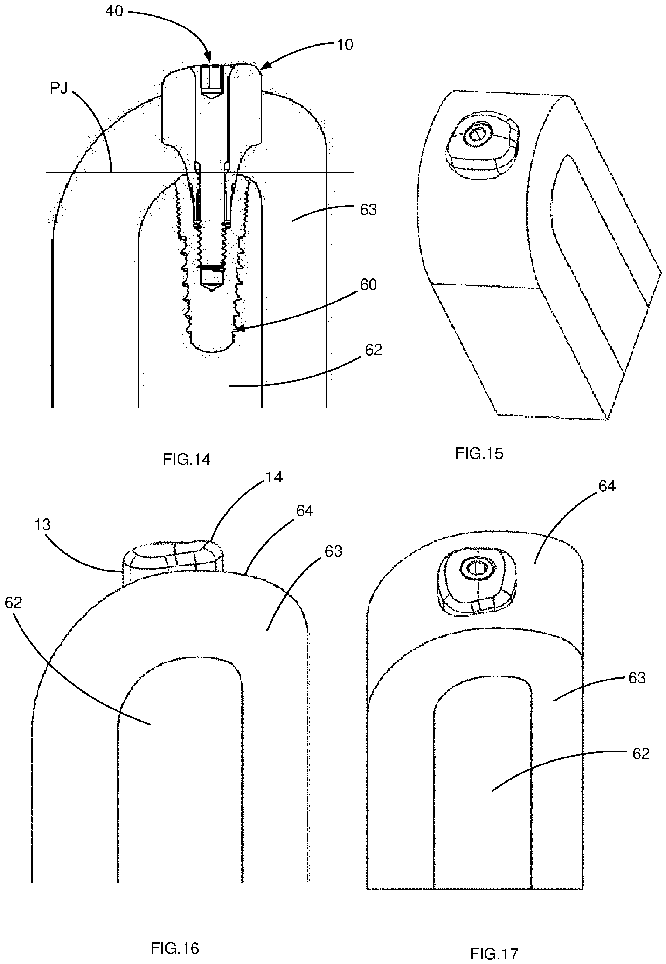

L'élément de cicatrisation 10 est monobloc, c'est-à-dire qu'il est constitué d'une seule pièce et de préférence à partir d'un unique matériau. Comme illustré sur les figures 11 à 13, l'élément de cicatrisation 10 comprend une partie supérieure 31 destinée à être en contact avec la gencive 63 et une partie inférieure 32 destinée à être introduite dans l'ouverture de l'implant pour coopérer avec le dispositif de connexion 3. L'élément de cicatrisation comprend une ouverture traversante 11 orientée selon un axe 12 et destinée à recevoir une vis 40 vissée dans l'ouverture filetée 21 de l'implant. L'élément de cicatrisation est donc destiné à être fixé sur l'implant par l'intermédiaire de la vis 40. Lorsque l'élément de cicatrisation est fixé sur l'implant, l'axe 12 de l'ouverture traversante est confondu avec l'axe longitudinal L de l'implant. Cet assemblage est notamment illustré par les figures 11 et 14. L'ouverture 11 traversante est de forme globalement cylindrique et comprend, à une extrémité du coté de la partie supérieure, une portée conique 33. Cette portée conique 33 est destinée à coopérer avec une portée conique d'une tête de vis 41 de forme complémentaire de manière à former une interface étanche. La portée conique 33 et la tête de vis 41 ont donc une fonction de cône d'étanchéité.

L'élément de cicatrisation 10 comprend au moins un filet 34 disposé au niveau de l'ouverture 11 et apte à coopérer avec une partie filetée 42 de la vis 40 pour empêcher une dissociation entre la vis 40 et l'élément de cicatrisation 10 par un seul mouvement de translation. La vis 40 comprend une partie cylindrique 43 non filetée entre la partie filetée 42 et la tête de vis 41. La partie filetée 42 est destinée à collaborer avec l'ouverture filetée 21 de l'implant pour bloquer en position l'élément de cicatrisation. La partie cylindrique 43 de la vis est destinée à être positionnée le long de l'ouverture 11 de l'élément de cicatrisation. Lors de l'assemblage de la vis 40 avec l'élément de cicatrisation 10, la vis doit être visée au travers de l'au moins un filet 34. La vis est conçue de sorte que, lorsque la tête de vis 41 est en appui sur la portée conique 33 de l'élément de cicatrisation, l'au moins un filet 34 est en vis-à-vis de la partie cylindrique 43 de la vis. Avantageusement, la partie filetée 42 de la vis 40 ne peut pas être simultanément en prise avec l'au moins un filet 34 et l'ouverture filetée 21 de l'implant. Un tel assemblage de la vis, également dénommé « imperdable » permet d'éviter de dissocier par erreur un élément de cicatrisation de la vis qui lui est associée, par exemple cet assemblage permet d'éviter de faire tomber la vis en manipulant l'élément de cicatrisation. L'élément de cicatrisation et la vis peuvent ainsi être livrés pré-assemblés ce qui réduit la quantité de manipulations pour le dentiste. En outre, l'au moins un filet 34 constitue également un point d'accroche de l'élément de cicatrisation qui pourra être utilisé lors d'un retrait ultérieur de l'élément de cicatrisation. En effet, le dentiste peut alors dévisser partiellement la vis de manière à dissocier sa partie filetée 42 de l'ouverture filetée 21 de l'implant tout en conservant une prise de la partie filetée 42 sur l'au moins un filet 34 de l'élément de cicatrisation. Le dentiste peut alors facilement saisir la tête de vis et tirer dessus pour démonter l'élément de cicatrisation sans transmettre d'effort à l'implant et sans gêne pour le patient.

L'élément de cicatrisation 10 comprend à son extrémité inférieure et sur un pourtour extérieur une portion de section hexagonale 35, apte à coopérer avec l'ouverture de section hexagonale 22 de l'implant. L'interface ainsi formée permet de garantir une fixation de l'élément de cicatrisation 10 à orientation unique, sans rotation de l'élément de cicatrisation autour de l'implant 60. La portion de section hexagonale 35 et l'ouverture de section hexagonale 22 sont des éléments anti-rotationnels qui pourraient être remplacés par tous autres éléments anti-rotationnels équivalents. L'élément de cicatrisation comprend ainsi un dispositif de fixation sur implant à son extrémité inférieure. En outre, l'élément de cicatrisation comprend également sur le pourtour extérieur de sa partie inférieure 32 une portion tronconique 36 ou sensiblement tronconique, apte à coopérer avec la portée conique 23 de l'implant pour former une interface étanche entre l'implant et l'élément de cicatrisation. La portion tronconique 36 comprend une frontière entre la partie inférieure 32 et la partie supérieure 31 de l'élément de cicatrisation. La portée conique 23 et la portion tronconique 36 ont une fonction de cône d'étanchéité et également une fonction de positionnement unique de l'élément de cicatrisation par rapport à l'implant. En effet l'assemblage de la portée conique 23 avec la portion tronconique 36 constitue une liaison pivot d'axe confondu avec l'axe longitudinal L. En particulier, après serrage de la vis 40, une telle liaison réduit à zéro tout jeu en translation entre l'élément de cicatrisation et l'implant selon l'axe longitudinal L ou tout axe perpendiculaire à l'axe longitudinal L. De plus, comme une rotation de l'élément de cicatrisation par rapport à l'implant est impossible grâce à l'interface constituée par la portion de section hexagonale 35 et l'ouverture de section hexagonale 22, la liaison entre l'élément de cicatrisation et l'implant est une liaison particulièrement rigide.

La partie supérieure de l'élément de cicatrisation comprend une face terminale 14 au travers de laquelle débouche la portée conique 33 de l'ouverture 11 et une surface latérale 13 autour de laquelle la gencive 63 est destinée à se cicatriser. La portée conique est orientée vers l'intérieur de l'élément de cicatrisation de sorte que la tête de vis (41) est noyée dans l'élément de cicatrisation. Ainsi la tête de vis (41) ne dépasse pas de la face terminale 14.

Les implants existants peuvent avoir des formes différentes et notamment des dispositifs de connexion 3 différents. Il peut exister autant d'éléments de cicatrisation différents que de dispositifs de connexion différents, afin de pouvoir disposer, pour chaque implant existant, d'un élément de cicatrisation doté d'un dispositif de connexion qui lui est adapté.

L'élément de cicatrisation 10 a pour fonction de venir se loger au sein de la gencive incisée, après fixation d'un implant. La configuration finale est représentée sur la figure 14. Dans cette configuration, l'implant 60 est solidarisé à la structure osseuse 62 et émerge faiblement de la partie osseuse dans la gencive 63. L'élément de cicatrisation 10 est fixé à l'implant 60 de sorte que la gencive 63 est presque exclusivement en contact avec l'élément de cicatrisation 10. L'élément de cicatrisation participe temporairement au procédé de restauration, permettant la cicatrisation et la fabrication sans heurt de la prothèse définitive, comme cela sera détaillé par la suite.

La gencive 63 se cicatrise donc autour de la surface latérale 13 de l'élément de cicatrisation 10. Pour cela, cette surface latérale 13 est choisie pour correspondre au mieux au milieu buccal du patient. La surface terminale 14 de l'élément de cicatrisation est destinée à rester visible au-dessus de la surface gingivale 64 de la gencive 63, puisque la gencive reste intégralement en contact avec la surface latérale 13 de l'élément de cicatrisation. En remarque, la partie haute de la surface latérale 13 et la surface terminale 14 forment donc une surface émergente de l'élément de cicatrisation. Cette surface émergente est notamment illustrée par les figures 15 à 17. Pour cela, des éléments de cicatrisation de hauteur différente peuvent être prévus pour s'adapter à différentes configurations de la géométrie buccale. A titre d'exemples de réalisation, trois hauteurs différentes standard permettent une bonne adaptation à toutes les situations. Cette hauteur est avantageusement comprise entre 3 et 7 mm. Une coloration de la vis peut permettre d'identifier rapidement la hauteur de l'élément de cicatrisation. Par exemple, une vis de couleur bleu peut être associée à l'élément de cicatrisation de petite taille. Une vis de couleur verte peut être associée à l'élément de cicatrisation de taille intermédiaire. Une vis de couleur rouge peut être associée à l'élément de cicatrisation de grande taille. Ainsi, le dialogue entre dentistes et prothésistes peut être simplifié.

Selon le mode de réalisation de l'invention, la forme de l'élément de cicatrisation est spécifiquement choisie pour favoriser la cicatrisation de la gencive, selon une forme anatomique correspondant au mieux à la dent à remplacer et par conséquent aussi à la future prothèse destinée à occuper cet espace buccal. Cette forme est notamment caractérisée par la section plane de sa surface latérale 13, cette section étant une section transverse par un plan perpendiculaire P à la surface latérale 13, représenté sur la figure 11, et sensiblement parallèle à la surface terminale 14. En remarque, cette section est sensiblement reproduite par la forme de la surface terminale 14, ou plus précisément par la projection de cette surface terminale 14 sur un tel plan perpendiculaire, c'est-à-dire sensiblement parallèle à la surface gingivale 64.

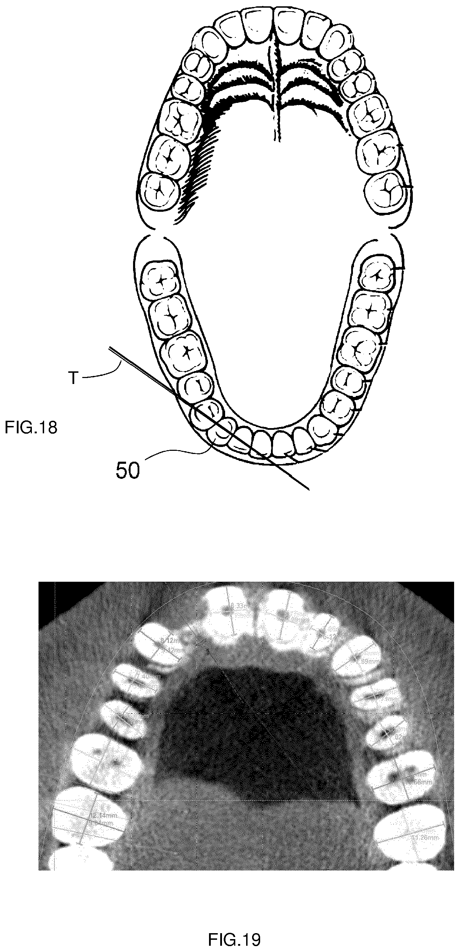

Pour comprendre l'approche retenue, la figure 18 illustre une vue de dessus des dents supérieures et inférieures et la figure 19 illustre une vue en coupe au niveau du plan justogingival PJ d'une dentition, représenté sur la figure 14, au niveau de la racine des émergences des dents. Ces figures montrent que les dents possèdent des sections de formes différentes, que l'on peut simplifier par des formes rectangulaires et/ou carrées et/ou triangulaires, mais plus précisément trapézoïdales.

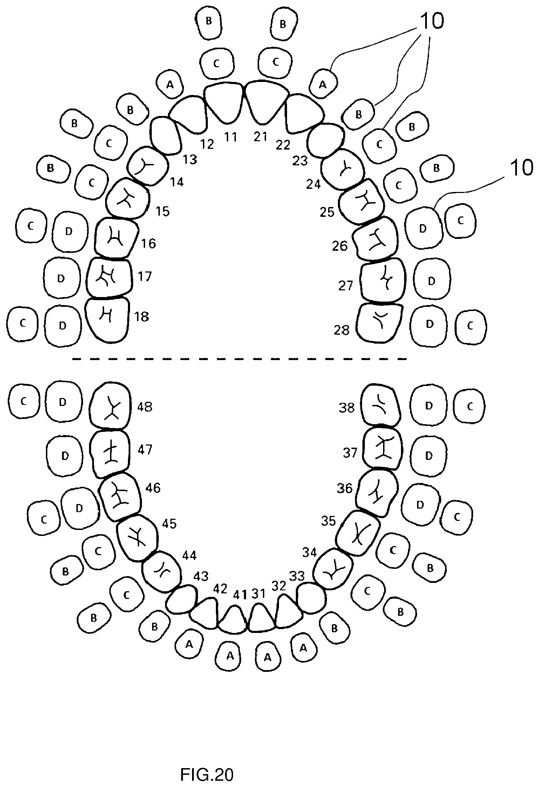

Selon le mode de réalisation choisi, une série d'éléments de cicatrisation 10 de formes différentes va permettre de reproduire au mieux ces différentes formes. La figure 20 représente ainsi une vue de dessus des sections de toutes les dents et une vue de dessus d'éléments de cicatrisation 10 associés à chaque dent. Les formes des différentes séries de dents, numérotées de 11 à 18, de 21 à 28, de 31 à 38 et de 41 à 48 sur cette figure, ces numéros ne devant pas être confondus avec les références numériques utilisées par ailleurs sur les autres figures pour désigner les caractéristiques de l'invention, sont toutes approchées par l'intermédiaire de quatre éléments de cicatrisation 10 différents, référencés A à D. Pour certaines dents, voire toutes les dents, plusieurs éléments de cicatrisation, parmi les éléments de cicatrisation A à D, apparaissent adaptés.

Dans l'exemple de réalisation choisi et illustré par la figure 20, les éléments de cicatrisation A sont adaptés pour traiter la restauration des incisives latérales supérieures et toutes les incisives inférieures. Les éléments de cicatrisation B sont adaptés pour la restauration des canines et des prémolaires, les éléments de cicatrisation C sont adaptés pour la restauration des molaires intermédiaires puis les éléments de cicatrisation D sont adaptés pour la restauration des molaires les plus grosses. En variante, la série d'éléments de cicatrisation 10 pourrait comprendre un tout autre nombre d'éléments de cicatrisation différents, par exemple trois ou cinq éléments de cicatrisation différents.

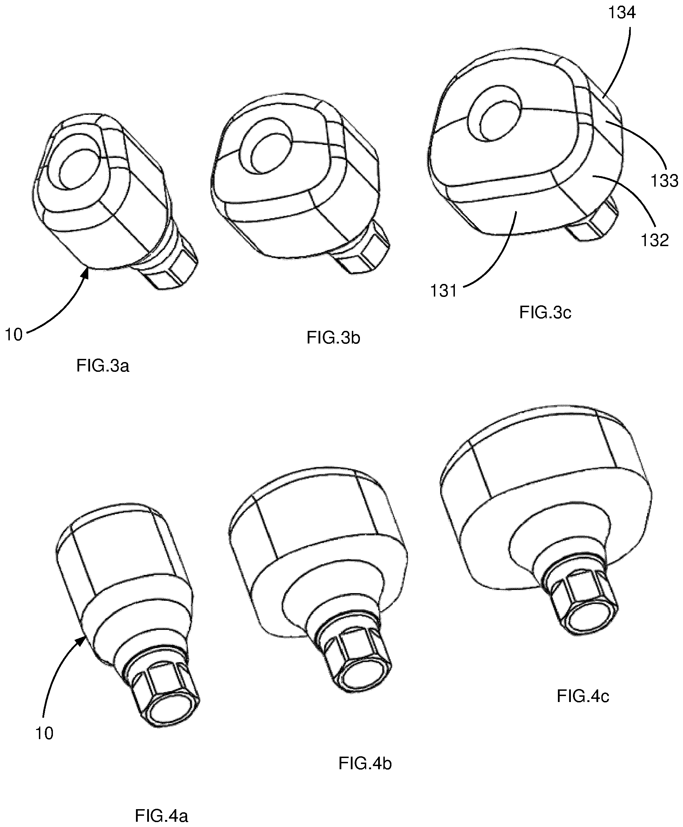

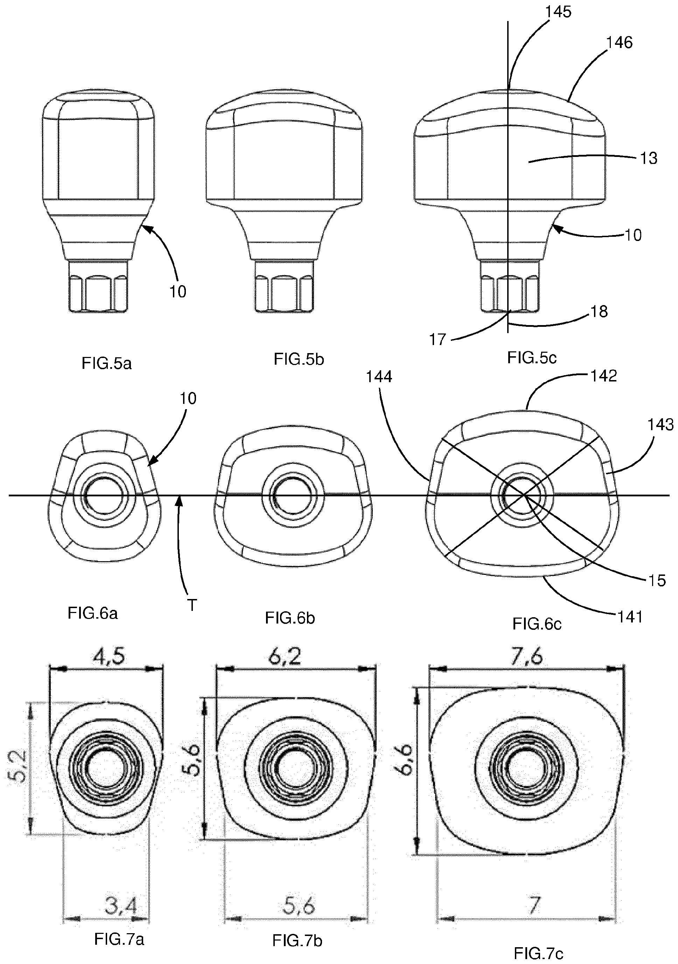

Ces éléments de cicatrisation vont maintenant être décrits plus en détail en considérant une série de trois éléments de cicatrisation A, B et C. L'élément de cicatrisation A est particulièrement illustré par les figures 3a à 7a, l'élément de cicatrisation B par les figures 3b à 7b et l'élément de cicatrisation C par les figures 3c à 7c. Pour ne pas alourdir les figures, les références numériques ne sont pas reproduites sur tous les éléments de cicatrisation de ces figures ; toutefois, tous ces éléments de cicatrisation possèdent les mêmes caractéristiques, qui vont être décrites.

Comme cela ressort des figures 3 et 6, les surfaces terminales 14 de ces éléments de cicatrisation 10 (A à C), destinées à un positionnement au-dessus de l'émergence gingivale, sont sensiblement planes et destinées à un positionnement parallèle à un plan horizontal (parallèle au plan justogingival PJ, entre 1 et 2 mm inclus au-dessus de ce plan) correspondant au plan de coupe de la figure 18. Elles sont toutefois légèrement bombées, présentant une partie centrale 145, plus particulièrement visible sur les figures 5a à 5c, destinées à s'élever plus au-delà de la gencive que ses parties périphériques 146.

La section transverse de l'élément de cicatrisation, par un plan P perpendiculaire à sa surface latérale 13, comme explicité précédemment, qui donne la forme finale à la gencive après cicatrisation, est sensiblement reproduite par la surface terminale 14 de l'élément de cicatrisation, qui vient dans son prolongement. Les sections de tous les éléments de cicatrisation présentent toutes une forme sensiblement trapézoïdale. Elles comprennent un grand côté 141, qui sera disposé du côté de l'extérieur de la bouche (côté vestibulaire), un petit côté 142 opposé parallèle, qui sera disposé du côté de l'intérieur de la bouche (côté lingual), reliés par deux côtés 143, 144. Le croisement des diagonales du trapèze permet de définir un centre 15. De plus, en considérant le centre 17 de l'ouverture 11 sensiblement circulaire de l'élément de cicatrisation 10 au niveau de son extrémité inférieure, il est possible de définir un axe 18 central de l'élément de cicatrisation, passant par les deux points centraux 15, 17. Cet axe 18 de l'élément de cicatrisation 10 est perpendiculaire à la surface terminale 14. L'axe 18 est également confondu avec l'axe de l'ouverture 11 et l'axe longitudinal L de l'implant.

Les trois types d'éléments de cicatrisation 10, A, B et C, diffèrent donc notamment par la forme trapézoïdale de la section transverse de leurs surfaces latérales 13. En fonction de l'élément de cicatrisation considéré, la forme trapézoïdale peut se rapprocher d'une forme triangulaire ou d'une forme rectangulaire, voire d'une forme carrée. A titre d'exemples de réalisation, les figures 7a à 7c donnent des ordres de grandeur des dimensions de ces éléments de cicatrisation, en millimètres.

Naturellement, cette forme sensiblement trapézoïdale retenue présente des angles arrondis et des côtés courbés, pour garantir de ne pas heurter la gencive. De plus, la surface terminale 14 de chaque élément de cicatrisation présente, à l'exception de l'ouverture 11, une surface continue, sans reliefs, et/ou sans partie creuse, et/ou sans gorge, et/ou sans arrête, et/ou sans aspérité. Cette surface est convexe. Cette géométrie sans aspérité est favorable à l'hygiène buccale, réduit l'accumulation d'aliments et le dépôt de la plaque dentaire.

En variante, la série d'éléments de cicatrisation pourrait comprendre un nombre différents de géométries différentes, par exemple au moins deux. Dans une variante de réalisation simplifiée, une seule forme d'élément de cicatrisation pourrait convenir pour toutes les dents.

Selon d'autres variantes de réalisation, la section transverse d'un élément de cicatrisation au niveau de sa surface latérale 13 pourrait s'approcher de tout polygone, comme un polygone à trois, cinq ou six côtés. En variante, les angles de ces polygones pourraient être si arrondis que la forme globale s'approcherait d'une forme oblongue, voire de section d'ovoïde, voire de toute autre forme plus éloignée d'un polygone. Avantageusement, cette forme comprend au moins un centre ou point parfaitement défini géométriquement pour définir un centre 15, voire un éventuel axe 18 de l'élément de cicatrisation.

Selon le mode de réalisation, la géométrie de la surface émergente visible de l'élément de cicatrisation du côté de l'intérieur de la bouche diffère de la géométrie du côté de l'extérieur, pour tenir compte de la courbure de la gencive. Cette forme de la surface émergente de l'élément de cicatrisation est donc asymétrique par rapport à un plan médian contenant la tangente T à la gencive, représentée sur les figures 6a à 6c, et plus précisément sur la figure 18 en considérant une dent 50 à restaurer. Ce plan médian, dit plan tangent T, est parallèle à la tangente T à la gencive, perpendiculaire au plan justogingival PJ, passe au milieu 15 d'un élément de cicatrisation.

Ainsi, une forme circulaire pour la section d'un élément de cicatrisation, associée par exemple à un élément de cicatrisation cylindrique, est inadaptée. Plus généralement, toute courbe plane présentant une symétrie autour d'un point ou d'un axe est peu ou pas adaptée pour la section susmentionnée de l'élément de cicatrisation, car d'une part, elle ne serait pas adaptée à l'anatomie de la bouche et, d'autre part, son orientation circulaire autour de cet axe ne serait plus identifiable. Pour les mêmes raisons, la surface émergente et visible de l'élément de cicatrisation n'est donc pas symétrique par rapport à au moins un, ou même plusieurs plans parallèles à son axe 18, et/ou comprenant cet axe 18. Elle n'est pas symétrique par rapport à au moins un, ou plusieurs plans perpendiculaires à la surface émergente et passant par son centre 15, que nous appelons plans médians perpendiculaires. Dans l'exemple représenté, seul le plan perpendiculaire au plan tangent T mentionné, passant au milieu des deux côtés 141, 142, forme un plan de symétrie. Les remarques précédentes s'appliquent à la surface émergente de l'élément de cicatrisation, ou à sa section transverse par un plan de coupe P défini précédemment, ou à la projection de sa surface émergente sur un tel plan P. Le plan médian perpendiculaire est alors tout plan perpendiculaire au plan P et passant au centre de la géométrie considérée de l'élément de cicatrisation. Alternativement, un plan médian perpendiculaire peut se définir comme tout plan contenant l'axe 18 de l'élément de cicatrisation. Cette surface émergente d'un élément de cicatrisation peut finalement prendre toute forme tridimensionnelle identifiable, permettant de reconnaître l'élément de cicatrisation utilisé et éventuellement de connaître son orientation, pour remplir une seconde fonction qui sera détaillée par la suite.

En complément de l'asymétrie décrite précédemment, qui se manifeste dans un plan horizontal, parallèle au plan justogingival, l'élément de cicatrisation comprend avantageusement en variante ou complément une asymétrie verticale, c'est-à-dire dans la direction perpendiculaire au plan justogingival. En effet, selon le mode de réalisation, notamment visible sur les figures 14, 16, 21, 22, l'élément de cicatrisation présente une hauteur supérieure du côté lingual par rapport à sa hauteur du côté opposé vestibulaire. Cette autre asymétrie, dite asymétrie verticale, présente aussi le premier avantage d'offrir une forme anatomique, et le deuxième avantage de participer à la reconnaissance de l'identité et/ou du positionnement de l'élément de cicatrisation. Sur le mode de réalisation illustré sur les figures 14, 16, 21, 22, on note que la surface supérieure de l'élément de cicatrisation présente globalement une inclinaison par rapport à un plan horizontal. Cette inclinaison est sensiblement constante, la coupe de la surface représentée par la figure 14 montrant une extrémité supérieure sensiblement linéaire.

Les surfaces terminales 14 des éléments de cicatrisation sont prolongées à partir de leur périphérie 146 par la surface latérale 13 autour de laquelle se cicatrise la gencive, et qui donne ainsi la forme de gencive adaptée à la future prothèse. Cette surface latérale 13 présente plusieurs surfaces 131, 132, 133, 134, sensiblement planes, éventuellement légèrement courbées, s'étendant selon une direction sensiblement parallèle à l'axe 18 de l'élément de cicatrisation et/ou parallèlement à l'axe longitudinal L de l'implant, en prolongeant respectivement les différents côtés 141, 142, 143, 144 de la surface terminale 14 de l'élément de cicatrisation. Les interfaces entre la surface terminale 14 et ces différentes parties de la surface latérale 13 sont réalisées par des surfaces arrondis, sans aspérité, notamment convexes.

L'élément de cicatrisation peut se trouver en matériau plastique, compatible avec une utilisation médicale, et de couleur rose, blanche ou crème. En particulier l'élément de cicatrisation peut être fabriqué à partir d'un matériau polymère, notamment à partir d'un matériau « PEEK ». En variante, il peut être en métal, par exemple en titane, ou peut être en zircone. L'élément de cicatrisation peut être fabriqué par usinage et/ou par moulage et/ou par addition de matière, autrement dit par impression 3D.

L'utilisation des éléments de cicatrisation permet donc de favoriser une cicatrisation idéale de la gencive dans un procédé de restauration dentaire, comme cela a été discuté, du fait de sa géométrie conçue en phase avec l'anatomie buccale. En remarque, cet élément de cicatrisation peut en variante être totalement sous-gingival et invisible, puis rendu visible par intervention sur la gencive pour mettre en oeuvre le reste du procédé de reconnaissance qui est décrit ci-après. Dans ce cas, la partie extrême de l'élément de cicatrisation sera toujours appelée abusivement partie émergente.

Outre les avantages décrits précédemment, l'élément de cicatrisation permet la mise en oeuvre d'un procédé de restauration avantageux, et d'un procédé de fabrication d'une prothèse dentaire et d'un pilier définitifs, avec une traumatisation minimale de la gencive. En effet, il est possible d'obtenir une empreinte numérique ou physique de la zone à restaurer sans retirer l'élément de cicatrisation en bouche, donc sans heurter la gencive. Ainsi, en plus de sa première fonction de cicatrisation, détaillée précédemment, l'élément de cicatrisation remplit une seconde fonction lors du procédé de restauration, en permettant la définition avantageuse de la forme du pilier de restauration et/ou de la prothèse avant son retrait. Cette fonction est complémentaire de sa première fonction de cicatrisation puisqu'elle permet de ne pas traumatiser la gencive après sa cicatrisation selon une forme anatomique avantageuse choisie.

Pour cela, en fin de la phase de cicatrisation du procédé de restauration dentaire, un praticien peut prendre une empreinte numérique de la bouche du patient, sans retirer l'élément de cicatrisation. Les données de numérisation, obtenues par tout appareil comme un scanner buccal par exemple, sont transmises automatiquement à un ordinateur doté d'un logiciel de restauration dentaire. Ce logiciel est doté d'une interface homme machine, par laquelle un opérateur peut indiquer le modèle d'élément de cicatrisation qu'il a utilisé, ou plus généralement la référence de l'élément de cicatrisation, et éventuellement de l'implant utilisé.

A partir des données de numérisation, un logiciel détermine automatiquement l'axe de l'élément de cicatrisation, par construction géométrique, par exemple à partir de l'identification du centre 15 de l'élément de cicatrisation et de la direction perpendiculaire à la surface terminale 14 passant par ce centre 15. Par cette construction, il peut ainsi déterminer automatiquement l'axe de l'implant, sans avoir à le visualiser directement. En effet, l'élément de cicatrisation est avantageusement aligné avec l'implant, son axe étant ainsi confondu avec celui de l'implant.

Ensuite, comme la géométrie de l'élément de cicatrisation correspond à un positionnement unique autour de son axe 18, ou autour de l'axe longitudinal L de l'implant, pour respecter le milieu buccal et notamment la géométrie de la gencive vers l'intérieur de la bouche (côté lingual) qui diffère de sa géométrie vers l'extérieur (côté vestibulaire), il est possible de déduire de son orientation l'orientation de l'implant, et notamment son dispositif de connexion, sans avoir à le visualiser directement. A titre d'exemple, il est possible d'imposer lors de cette construction que l'un des côtés parallèles de la forme trapézoïdale de la surface 14 visible de l'élément de cicatrisation soit parallèle à un côté de l'ouverture hexagonale du dispositif de fixation de l'implant.

Enfin, dans le cas où des éléments de cicatrisation de hauteur différente existent, il reste à déterminer cette hauteur, pour positionner parfaitement l'implant invisible. Une première approche peut consister à former des éléments de cicatrisation ou des vis de couleur différente pour des hauteurs différentes. Une seconde approche consiste à disposer tout indicateur sur la surface 14 visible de l'élément de cicatrisation pour indiquer cette hauteur, cet indicateur pouvant être composé de chiffres et/ou de lettres et/ou de tout symbole et/ou de couleurs et/ou de marquages laser et/ou d'un ou plusieurs codes-barres et/ou de codes datamatrix et/ou de tout code d'identification. Une troisième approche peut consister à former des éléments de cicatrisation présentant une surface 14 visible différente selon leur hauteur. A titre d'exemple, les éléments de cicatrisation A, B, C pourraient conserver la même forme mais avec des dimensions légèrement plus grandes pour des hauteurs plus importantes, permettant ainsi de les différencier automatiquement puis de déterminer leur hauteur.

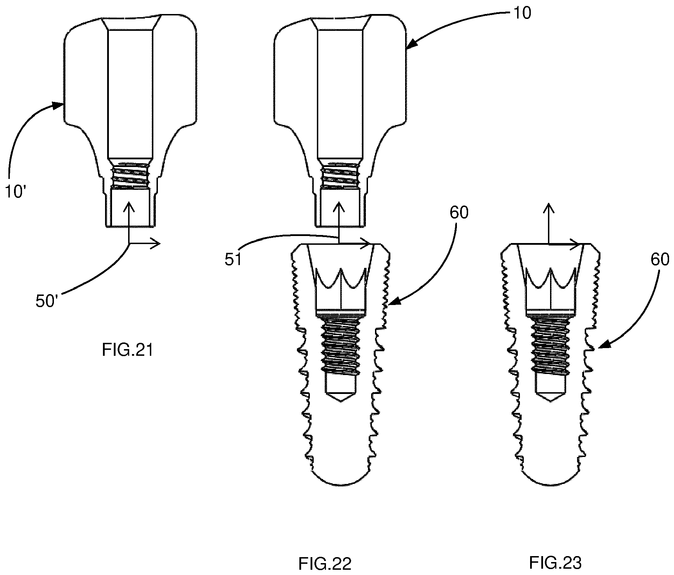

En variante ou complément de réalisation, un opérateur saisit par une interface homme machine la référence de l'élément de cicatrisation, ce qui permet au logiciel de retrouver les caractéristiques de cet élément de cicatrisation comme sa hauteur, son centre et/ou axe, dans une bibliothèque présente sous forme de base de données stockée dans une mémoire électronique qu'il peut consulter. La figure 21 illustre à titre d'exemple un élément de cicatrisation 10' virtuel mémorisé dans la bibliothèque associée au logiciel de restauration. Un repère dans l'espace 51' est associé à l'élément de cicatrisation, permettant son positionnement dans l'espace. En variante, le logiciel peut reconnaître automatiquement l'élément de cicatrisation à partir de ses caractéristiques géométriques, sans saisie manuelle de sa référence. Un opérateur peut assister un logiciel au bon positionnement du repère 51 de l'élément de cicatrisation réel, c'est-à-dire à la reconnaissance de son positionnement réel, en saisissant sur une image obtenue par l'étape de numérisation mentionnée ci-dessus et présentée à l'opérateur sur un écran d'une interface homme machine un ou plusieurs points de la surface émergente.

A partir des données numérisées, et éventuellement de l'aide du ou des points de la surface de l'élément de cicatrisation manuellement renseignés par un opérateur, le logiciel sait donc associer l'élément de cicatrisation virtuel issu de sa bibliothèque à l'environnement buccal numérisé, en remplacement de l'élément de cicatrisation réel, pour obtenir une reproduction numérique plus parfaite. En remarque, la forme de l'élément de cicatrisation réel permet de déterminer son orientation, notamment du fait de sa forme asymétrique, comme mentionné précédemment. En remarque, comme cela a été décrit, cette asymétrie peut être simple, dans un plan horizontal et/ou vertical, ou être une bi-asymétrie, à la fois horizontale et verticale. Comme représenté sur la figure 22, le repère réel 51 de l'élément de cicatrisation 10 réel est ainsi déterminé automatiquement par le logiciel. Il est possible de positionner parfaitement l'élément de cicatrisation virtuel sur l'empreinte numérique, automatiquement ou éventuellement par l'intermédiaire d'une intervention d'un opérateur sur une interface homme machine permettant de visualiser l'empreinte buccale et l'élément de cicatrisation. Ce positionnement parfait de l'élément de cicatrisation virtuel permet d'en déduire toutes les géométries avoisinantes, à partir des références connues mémorisées dans la base de données associée à l'élément de cicatrisation précis considéré, dont la position de l'implant 60 et la géométrie de la gencive cicatrisée sans présence de l'élément de cicatrisation 10 comme représenté par la figure 23.

Lorsque le logiciel de restauration a repositionné avec exactitude le positionnement de l'implant caché, il déduit de ces connaissances la géométrie finale du pilier de restauration à fabriquer, qui doit être fixé à l'implant et occuper tout le volume gingival défini par l'élément de cicatrisation, puis la géométrie de la prothèse dentaire destinée à se fixer sur ce pilier, de manière connue.

En remarque, ce procédé de restauration peut se faire totalement numériquement, donc virtuellement, ou comprendre des phases de construction d'une maquette en plastique ou plâtre. Dans ce dernier cas, une empreinte physique, par exemple en silicone, peut être réalisée, un plâtre peut être coulé dans l'empreinte pour créer le maître modèle, c'est à dire une réplique de l'arcade dentaire à restaurer, qui est ensuite scannée en laboratoire pour reconstruire une image numérique.

Comme cela ressort de la description ci-dessus, la dernière phase du procédé de restauration repose donc sur un dispositif de restauration, qui comprend une unité centrale de traitement et de commande, comprenant ici au moins un microprocesseur, lié à une mémoire électronique, sur lequel est exécuté un logiciel permettant la mise en oeuvre de tout ou partie des étapes du procédé de restauration décrit ci-dessus. Cette unité centrale est liée par un dispositif de communication à un module d'obtention de données numériques représentant tout ou partie d'une dentition d'un patient, qui peut consister en un appareil comme un scanner buccal. Elle est aussi liée à une interface homme machine, comprenant par exemple un écran et/ou un clavier, pour permettre les échanges avec un opérateur, comme explicité ci-dessus. L'unité centrale réalise ensuite tous les traitements nécessaires, calculs et autres, par un moyen logiciel. Elle est enfin apte à générer et transmettre des commandes de fabrication à un dispositif de fabrication d'un pilier de restauration et/ou de prothèse. Elle peut de plus être liée par un second dispositif de communication à un dispositif de fabrication comme une machine outil.

## Revendications

1. Elément de cicatrisation (10), **caractérisé en ce qu'**il est monobloc, et comprend un dispositif de fixation au niveau d'une de ses extrémités pour un implant (60), l'élément de cicatrisation (10) comprenant une surface latérale (13) destinée à une intégration au sein d'une gencive pour mettre en forme la gencive lors de sa cicatrisation, et une surface terminale (14), une partie de la surface latérale (13) et de la surface terminale (14) formant une surface émergente, destinée à rester hors de la gencive, qui est asymétrique par rapport à au moins un plan médian perpendiculaire, **en ce qu'**il comprend une vis (40) destinée à fixer l'élément de cicatrisation dans un implant, et **en ce qu'**il comprend une ouverture (11) traversante pour le passage de la vis (40).

2. Elément de cicatrisation (10) selon la revendication précédente, **caractérisé en ce que** la surface terminale (14) ou la surface émergente de l'élément de cicatrisation (10) ou de la vis (40) positionnée dans l'élément de cicatrisation (10) comprend un indicateur pour indiquer sa hauteur.

3. Elément de cicatrisation (10) selon l'une des revendications précédentes, **caractérisé en ce que** l'élément de cicatrisation (10) comprend une portée conique (33) coopérant avec une portion conique d'une tête de la vis (41) pour rendre étanche une interface entre la vis (40) et l'élément de cicatrisation (10)

4. Elément de cicatrisation (10) selon la revendication précédente, **caractérisé en ce que** la partie supérieure de l'élément de cicatrisation (10) comprend la face terminale (14) au travers de laquelle débouche la portée conique (33) de l'ouverture (11) et la surface latérale (13) autour de laquelle la gencive (63) est destinée à se cicatriser, la portée conique (33) étant orientée vers l'intérieur de l'élément de cicatrisation (10) de sorte que la tête de vis (41) est noyée dans l'élément de cicatrisation (10) et ne dépasse pas de la face terminale (14).

5. Elément de cicatrisation (10) selon l'une des revendications précédentes, **caractérisé en ce qu'**il comprend, au niveau de l'ouverture (11), au moins un filet (34) apte à coopérer avec une partie filetée (42) d'une vis (40) pour empêcher une dissociation entre la vis (40) et l'élément de cicatrisation (10) par un seul mouvement de translation.

6. Elément de cicatrisation (10) selon l'une des revendications précédentes, **caractérisé en ce qu'**il comprend une partie inférieure (32) destinée à être introduite dans l'ouverture d'un implant et **en ce qu'**il comprend, sur le pourtour extérieur de sa partie inférieure (32), une portion tronconique (36) ou sensiblement tronconique, apte à coopérer avec une portée conique (23) d'un implant pour former une interface étanche entre l'implant et l'élément de cicatrisation.

7. Elément de cicatrisation (10) selon l'une des revendications précédentes, **caractérisé en ce que** la surface émergente est asymétrique dans un plan vertical, notamment la hauteur de l'élément de cicatrisation (10) étant supérieure du côté lingual à sa hauteur du côté opposé

8. Elément de cicatrisation (10) selon la revendication précédente, **caractérisé en ce que** les parties de la surface émergente de l'élément de cicatrisation (10) destinées respectivement à un positionnement orienté vers l'intérieur et vers l'extérieur de la bouche présentent une hauteur différente.

9. Elément de cicatrisation (10) selon l'une des revendications précédentes, **caractérisé en ce que** la surface latérale (13) est de forme anatomique **caractérisée par** la section transverse plane par un plan perpendiculaire à la surface latérale (13), et **en ce que** la forme ou la projection de la surface terminale (14) sur un plan horizontal parallèle à la surface gingivale (64) après positionnement en bouche reproduit ladite section transverse plane,

10. Elément de cicatrisation (10) selon l'une des revendications précédentes, **caractérisé en ce qu'**il est en matériau polymère, notamment en matériau « PEEK » ou en métal, en zircone ou en titane.

11. Elément de cicatrisation (10) selon l'une des revendications précédentes, **caractérisé en ce que** la surface émergente de l'élément de cicatrisation (10) est asymétrique dans un plan horizontal et/ou vertical par rapport à au moins un plan médian perpendiculaire à la surface émergente et passant par le centre de la surface émergente ou comprenant un axe (18) central de l'élément de cicatrisation.

12. Elément de cicatrisation (10) selon l'une des revendications précédentes, **caractérisé en ce que** l'élément de cicatrisation (10) comprend un élément anti-rotationnel, notamment une portion de section hexagonale (35), pour coopérer avec un élément anti-rotationnel d'un implant (60), notamment une ouverture de section hexagonale (22), et garantir une fixation de l'élément de cicatrisation (10) à orientation unique, sans rotation autour d'un implant (60).

13. Elément de cicatrisation (10) selon l'une des revendications précédentes, **caractérisé en ce qu'**une section transverse à la surface latérale (13) de l'élément de cicatrisation (10) ou une projection sur un plan parallèle de la surface émergente de l'élément de cicatrisation présente :
- une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
- une partie destinée à un positionnement orienté vers l'extérieur de la bouche de plus grande dimension qu'une partie destinée à un positionnement orienté vers l'intérieur.

14. Procédé de restauration dentaire comprenant une étape de détermination d'un positionnement d'un implant (60) dentaire, intégré à une structure osseuse (62) d'un individu, à partir de l'identification et du positionnement d'un élément de cicatrisation (10) monobloc selon l'une des revendications précédentes, fixé au niveau d'une de ses extrémités dans l'implant (60), l'élément de cicatrisation (10) comprenant une surface latérale (13) destinée à une intégration au sein d'une gencive pour mettre en forme la gencive lors de sa cicatrisation, et une surface terminale (14), une partie de la surface latérale (13) et de la surface terminale (14) formant une surface émergente, destinée à rester hors de la gencive, qui est asymétrique par rapport à au moins un plan médian perpendiculaire.

15. Procédé de restauration dentaire selon la revendication précédente, **caractérisé en ce que** l'étape de détermination du positionnement de l'implant (60) comprend les sous étapes suivantes :
- prise d'une empreinte manuelle pour créer une réplique de l'arcade dentaire qui est ensuite scannée pour reconstruire une image numérique, ou prise d'une empreinte numérique d'un espace buccal comprenant l'élément de cicatrisation (10) fixé sur l'implant (60);
- détection automatique du positionnement de l'implant (60) par l'identification de:
- l'axe de l'implant correspondant à un axe (18) de l'élément de cicatrisation identifié par la géométrie de sa surface émergente hors de la gencive (63) ou à partir d'une association à un élément de cicatrisation mémorisé stocké dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine ;
- l'orientation de l'implant à partir de l'orientation de la surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine ;
- la hauteur de l'implant par détermination de la hauteur de l'élément de cicatrisation, à partir d'une couleur ou d'un indicateur de sa surface émergente hors de la gencive ou à partir d'une association à un élément de cicatrisation mémorisé dans une base de données, notamment à partir de sa référence saisie dans une interface homme machine ou de sa reconnaissance automatique par la forme de sa partie émergente et/ou par la saisie manuelle du positionnement de plusieurs points de la surface émergente sur une représentation graphique sur une interface homme machine.
